Europäisches Patentamt

European Patent Office

Office européen des brevets

(11) Numéro de publication: **0 463 262 A1**

## DEMANDE DE BREVET EUROPEEN

(21) Numéro de dépôt: 90401696.1

(22) Date de dépôt: **15.06.90**

(51) Int. Cl.⁵: **B64D 17/00**, A63C 5/00, B64C 31/00

(43) Date de publication de la demande:
**02.01.92 Bulletin 92/01**

(84) Etats contractants désignés:
**AT CH DE GB IT LI SE**

(71) Demandeur: **Jault, Pascal**

**13 Rue de Nambot**
**F-79000 Niort(FR)**

(72) Inventeur: **Jault, Pascal**
**13 Rue de Nambot**
**F-79000 Niort(FR)**

(54) Dispositif de stabilité répondant aux réflexes humains dans l'air.

(57) Dispositif de stabilité répondant aux réflexes humains dans l'air, il est du type transmetteur de mouvement pour angles, un dispositif d'attache des pieds sur les tiges principales, permettent à l'homme par l'action de ses forces exercées de se diriger dans l'air.

FIG. 1

La présente invention a pour objet un dispositif qui permet d'évoluer dans l'air en chute libre. Dans l'élément de la technique, il s'apparente aux objets ludiques comme par exemple la planche à roulette qui, constituée d'un plateau monté sur des transmetteurs de mouvements pour angles, ces transmetteurs de mouvements étant des pièces rigides en forme de V comprenant une tige rigide pour le mouvement primaire, et une tige pour le mouvement secondaire ; les deux tiges pouvant pivoter autour des deux axes perpendiculaires passant par les extrémités réunies des deux tiges, les forces exercées dans les directions voulues sur l'une ou/et l'autre tige permettent de stabiliser ou d'orienter le transmetteur de mouvement pour angles dans les angles choisis. Le présent dispositif pouvant être, par exemple, largué d'un ballon ou d'une montgolfière, est conçu pour évoluer dans l'air. L'utilisateur portera un parachute pour amortir la vitesse de sa chute au point déterminé. En se référant aux dessins annexés, on se rendra compte de la conception du fonctionnement du dispositif ; il est en forme oblongue et aérodynamique pour assurer l'avancement dans une direction préférentielle 1 représentant l'avant, 2 représentant l'arrière, 3 représente les axes perpendiculaires qui sont influencés par les forces composées par la portance, par la résistance à l'avancement et aussi par les forces appliquées par les pieds de l'utilisateur, la position des pieds étant fixée d'une part et d'autre sur la tige pour le mouvement primaire du transmetteur de mouvement 4 et sur la tige pour le mouvement secondaire 5 ; le transmetteur de mouvement formant un ensemble rigide globalement en forme de V dont le centre de gravité des axes perpendiculaires 3 est abaissé par rapport aux extrémités de sortie de mouvement des tiges primaires et secondaires 4, 5 et 7. Des 5 angles 6 pour fixer les pieds de l'utilisateur, sont posés sur le bloc transmetteur de mouvement de façon oblique par rapport au plan longitudinal de façon à ce que l'utilisateur puisse exercer ses forces sur le plan longitudinal et aussi sur le plan transversal. Les formes des extrémités des tiges primaires et secondaires étant applaties pour assurer la portance et sont aussi en forme de V sur le plan transversal pour assurer la stabilité 7. Par ce fait les axes de roulis et de tangage sont contrôlés. Pour contrôler l'axe d'embardée, l'utilisateur exercera des poussées sur le plan transversal.

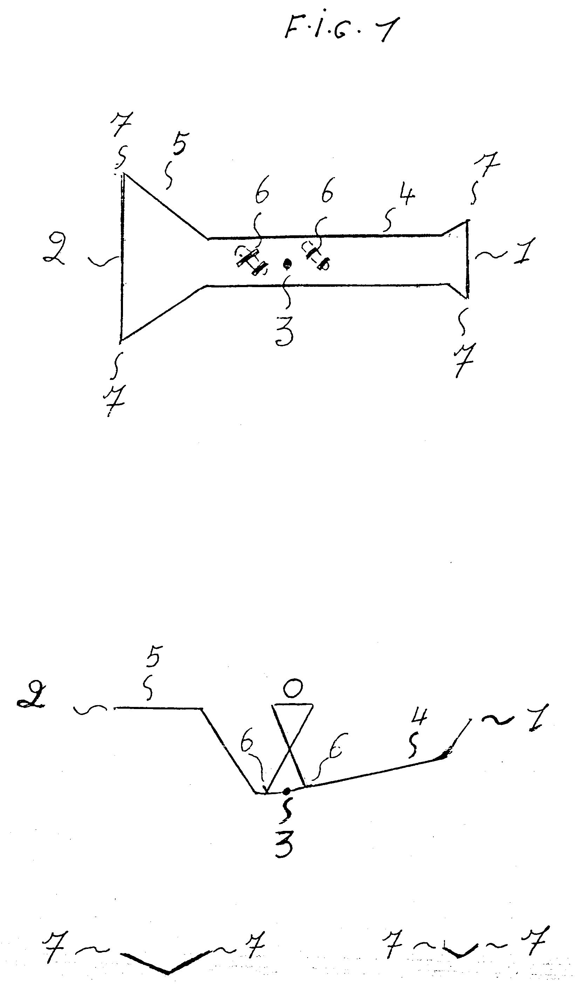

**Revendications**

Dispositif de stabilité répondant aux réflexes humains du type comprenant un bloc transmetteur de mouvement formé d'une seule pièce. Le dit bloc, comprenant une tige primaire et une tige secondaire pouvant pivoter autour des axes perpendiculaires qui passent par les extrémités réunies des deux tiges.

Caractérisé en ce qu'il comprend des sangles pour fixer les pieds, ces dites sangles (6) sont placées d'une part et d'autre, sur la tige pour le mouvement primaire (4) et la tige pour le mouvement secondaire (5).

1. dispositif selon la revendication 1, caractérisé en ce que ces dites sangles sont placées de façon obliques par rapport au plan longitudinal.

2. dispositif selon la revendication 1, caractérisé en ce que le centre de gravité des axes perpendiculaires est abaissé par rapport aux extrémités de sortie des tiges primaires et secondaires (4, 5 et 7).

3. dispositif selon la revendication 1, caractérisé en ce que les extrémités des tiges primaires et secondaires sont applaties, et aussi en forme de V sur le plan transversal.

F.I.G. 1

**Office européen
des brevets**

# RAPPORT DE RECHERCHE EUROPEENNE

Numéro de la demande

**EP 90 40 1696**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E,X | FR-A-2 642 725 (ROUSSEL et al.) <br> * En entier * <br> – – – | 1-4 | B 64 D 17/00 <br> A 63 C 5/00 <br> B 64 C 31/00 |
| X | US-A-4 898 345 (CLAYTON) <br> * Figures 3,6; colonne 5, lignes 37-45 * <br> – – – | 1,2 | |
| A | DE-A-3 402 474 (KRIEGER) <br> * Figures 13a,16a,b; page 6, lignes 22-27 * <br> – – – | 1,2 | |
| A | FR-A-2 465 500 (MULLER et al.) <br> * Figures 3,8,9 * <br> – – – | 1,2 | |
| A | FR-A-2 575 928 (DIMIER et al.) <br> * Figures 5,7 * <br> – – – – – | 4 | |

**DOMAINES TECHNIQUES RECHERCHES (Int. Cl.5)**

A 63 C
B 64 D
B 62 B
B 64 C

**Le présent rapport de recherche a été établi pour toutes les revendications**

| Lieu de la recherche | Date d'achèvement de la recherche | Examinateur |
|---|---|---|
| La Haye | 29 novembre 90 | STEEGMAN R. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
-------------------------------------------------------------
& : membre de la même famille, document correspondant